# EUROPÄISCHE PATENTANMELDUNG

(11) **EP 4 299 800 A1**
(43) Veröffentlichungstag der Anmeldung: **03.01.2024**
(21) Anmeldenummer: 22182699.3
(22) Anmeldetag: 01.07.2022
(51) Int. Cl.: C25F 3/16, C25F 7/00

(54) **VORRICHTUNG UND VERFAHREN ZUR PLASMAELEKTROLYTISCHEN BEARBEITUNG DER ELEKTRISCH LEITFÄHIGEN OBERFLÄCHE EINES WERKSTÜCKS DURCH ELEKTROLYTSTRAHLEN**

(71) Anmelder: Technische Universität Bergakademie Freiberg, 09599 Freiberg (DE)
(72) Erfinder: Stepputat, Vincent, 09599 Freiberg (DE); Penzel, Michael, 08267 Zwota (DE); Schröder, Sam, 09126 Chemnitz (DE); Zeidler, Henning, 09221 Neukirchen (DE)
(74) Vertreter: Heinemeyer, Karsten

(57) **Zusammenfassung**

Beschrieben wird eine Vorrichtung (1) und ein Verfahren zur plasmaelektrolytischen Bearbeitung einer elektrisch leitfähigen Oberfläche (2) eines Werkstücks (3). Die Vorrichtung verfügt über eine Ausbringungseinheit (4) zur Beaufschlagung der Oberfläche (2) mit einem Elektrolytstrahl, über eine Versorgungseinheit (5) zur wenigstens zeitweisen Versorgung der Ausbringungseinheit (4) mit dem zur Erzeugung des Elektrolytstrahls erforderlichen Elektrolyten, über wenigstens eine Elektrode (6), die während der Bearbeitung eine Gegenelektrode zur Oberfläche (2) bildet, und über wenigstens eine elektrische Energiequelle (7), mit der während der Bearbeitung die Elektrode und die Oberfläche derart mit elektrischer Energie versorgbar sind, dass zwischen der Elektrode (6) und der zu bearbeitenden Oberfläche (2) bei Berührung des Elektrolyten ein Strom fließt.

Die beschriebene technische Lösung zeichnet sich dadurch aus, dass die Ausbringungseinheit (4) ausgebildet ist, um die Oberfläche (2) des Werkstücks (3) zeitgleich oder zeitlich nacheinander mit einem ersten und wenigstens einem zweiten Elektrolytstrahl, die unterschiedliche Strahlformen, Strahlrichtungen, Strahlwirkbereiche auf der zu bearbeitenden Oberfläche, Anordnungen im Raum, Strahlzusammensetzungen und/oder Strömungseigenschaften aufweisen, zu beaufschlagen.

## Beschreibung

Die Erfindung betrifft eine Vorrichtung und ein Verfahren zur plasmaelektrolytischen Bearbeitung einer elektrisch leitfähigen Oberfläche eines Werkstücks. Die Vorrichtung verfügt hierbei über eine Ausbringungseinheit zur Beaufschlagung der Werkstückoberfläche mit einem Elektrolytstrahl, über eine Versorgungseinheit zur wenigstens zeitweisen Versorgung der Ausbringungseinheit mit dem zur Erzeugung des Elektrolytstrahls erforderlichen Elektrolyten und über wenigstens eine Elektrode, die während der Bearbeitung als Kathode eine Gegenelektrode zur Oberfläche bildet. Zur Herstellung der erforderlichen Spannung ist ferner wenigstens eine Spannungsquelle vorgesehen, mit der während der Bearbeitung der Werkstückoberfläche eine Spannung zwischen der Elektrode und der zu bearbeitenden Oberfläche, die jeweils zumindest teilweise in Kontakt mit dem Elektrolyten stehen, anlegbar ist.

Bei Werkstücken aus Metalllegierungen werden die Zieleigenschaften der Oberfläche regelmäßig nicht im primären Fertigungsschritt erreicht, sodass eine nachgelagerte Endbearbeitung bzw. Veredelung erforderlich ist. Diese umfasst beispielsweise das Polieren, Reinigen, Sterilisieren, Texturieren und Beschichten der Oberfläche sowie das Entgraten und Verrunden von Werkstückkanten. Dabei kommt insbesondere den Verfahren, welche die Oberflächeneigenschaften durch Materialabtrag verändern, eine erhebliche wirtschaftliche und technologische Bedeutung zu. Bekannt ist die Endbearbeitung von Metalloberflächen durch spanabhebende Verfahren mit geometrisch unbestimmter Schneide, wie Schleifen oder mechanisches Polieren, die eine geringe Rauheit und hohen Glanz ermöglichen. Diese setzen stets eine Erreichbarkeit der Fläche durch ein in der Regel rotierendes Werkzeug voraus, sodass die Bearbeitung von schmalen, konkaven Konturen und Innenflächen kaum realisierbar ist. Zudem erfordert das Verfahrensprinzip stets eine exakte Abstimmung der Relativposition des Werkzeugs zur bearbeiteten Oberfläche. Änderungen der Zielkontur, z. B. durch wechselnde oder individualisierbare Werkstücke, erfordern bei automatisierter Prozessführung aufwändige Anpassungen im NC-Programm, die die Flexibilität erheblich einschränken. Wird sie hingegen manuell durchgeführt, ist bei komplexen Bauteilen mit sehr langen Bearbeitungszeiten von ca. 20 Minuten zu rechnen. Zudem ist die Reproduzierbarkeit erheblich eingeschränkt, da die Ergebnisse stets von den individuellen Fähigkeiten der Mitarbeitenden abhängen, und mit einer Gesundheitsbelastung durch Schleifstäube zu rechnen. Demgegenüber zeichnen sich die ebenfalls bekannten Verfahren zum elektrochemischen Polieren, insbesondere das Elektropolieren und das elektrochemische Abtragen, durch einen kraftfreien Materialabtrag aus. Bei der elektrochemischen Metallbearbeitung werden die Werkstücke durch anodische Auflösung des an der Oberfläche befindlichen Metalls bearbeitet. Entsprechende Verfahren finden ihren Einsatz in unterschiedlichen Gebieten des Maschinenbaus, wie etwa der Luft- und Raumfahrttechnik, im Fahrzeugbau, Werkzeugbau in der Medizin- und Mikrosystemtechnik und sowie im Energieanlagenbau. Nahezu alle Metalle lassen sich auf diese Weise bearbeiten, wobei der Prozess im Gegensatz zur spanenden Bearbeitung nicht durch eine hohe Festigkeit oder Härte negativ beeinflusst wird. Insofern ist die elektrochemische Bearbeitung insbesondere für hochlegierte Werkstoffe, wie nickelbasierte Legierungen, Titanlegierungen oder gehärtete Werkstoffe, interessant. In Abhängigkeit des jeweils gewählten Verfahrens können aufgrund der verwendeten Elektrolyte oder der teilweise zum Einsatz kommenden hochkonzentrierten, heißen Mineralsäuren, die zu einem starken Materialabtrag und einer schnellen Kantenverrundung führen, Probleme auftreten. Zudem liegen die erreichbare Rauheit und der erreichbare Glanz nur im mittleren Anforderungsbereich, wobei typischerweise Rauheitswerte Ra von 0,2 µm erzielt werden können. Dies disqualifiziert die Verfahren insbesondere für dekorative und funktionelle Anwendungen, die eine hohen Glanzgrad der Oberfläche erfordern.

Eine spezielle Weiterentwicklung der bekannten Verfahren zur elektrochemischen Bearbeitung von metallischen Werkstücken stellt die plasmaelektrolytische Bearbeitung elektrisch leitfähiger Oberflächen dar. Plasmaelektrolytische Bearbeitungsverfahren sind Verfahren, mit denen die Beschaffenheit einer zumindest zeitweise mit einem Elektrolyten in Kontakt stehenden Werkstückoberfläche durch das Anlegen einer elektrischen Spannung verändert wird, wobei diese Veränderung durch die oberflächennahe Ausbildung eines Plasmas ermöglicht, begünstigt oder beeinflusst wird. Während unter anderem das plasmaelektrolytische Oxidieren der Herstellung verschleißbeständiger Randschichten insbesondere auf Leichtmetallen dient, wird beim plasmaelektrolytischen Polieren die Randschicht durch Materialabtrag verändert. Dies geschieht im Vergleich zum Elektropolieren unter Verwendung von wässrigen Salzlösungen statt hochkonzentrierten Säuren als Elektrolyt, wobei das Werkstück typischerweise in ein solches Elektrolytbad eingetaucht und anodisch kontaktiert wird. Durch Anlegen einer Gleichspannung von 200 V bis 450 V, vorzugsweise von 230 V bis 350 V, verdampft der mit dem Werkstück in Kontakt stehende Elektrolyt und bildet eine dieses umschließende Dampfhaut, welche die Elektrolytlösung von der Werkstückoberfläche verdrängt. Die über der Dampfhaut abfallende Polierspannung führt zu einer partiellen Ionisation und zur Ausbildung eines Plasmas. Die Oberfläche des Werkstücks wird durch eine Kombination physikalischer, chemischer und elektrochemischer Abtragprozesse gleichmäßig geglättet und gleichzeitig von Verunreinigungen befreit. Auf diese Weise lassen sich besonders glatte und glänzende Oberflächen innerhalb kürzester Zeit und ohne formgebundene Werkzeuge erzeugen. Außerdem ist es nicht erforderlich, das jeweilige Werkstück vorzubehandeln oder eventuell auf der Oberfläche vorhandene Öle oder Schmierstoffe zu entfernen. Ferner lässt sich je nach Material, das bearbeitet wird, durch eine plasmaelektrolytische Bearbeitung eine Werkstückoberfläche erzeugen, deren Korrosionsneigung gehemmt ist. Das Verfahren eignet sich mithin nicht nur für die Reduzierung der Oberflächenrauheit, sondern auch unter anderem für das Entgraten, das Erzeugen von Glanz, das Passivieren, das Reinigen, das Sterilisieren sowie die Glättung des Oberflächenprofils.

Eine gattungsgemäße Anlage zum Plasmapolieren ist aus der DE 10 2006 016 368 B4 bekannt. Die beschriebene Anlage ist geeignet zum Reinigen und Polieren von elektrisch leitfähigen Werkstückoberflächen und verfügt über einen Elektrolytbehälter, eine Aufnahme für das Werkstück und eine Energieversorgung zur Bereitstellung der zur plasmaelektrolytischen Bearbeitung erforderlichen Spannung. Ferner ist eine Steuerung zur Überwachung und Einstellung der erforderlichen Stromstärke vorgesehen, die die Stromstärke in Abhängigkeit der Geschwindigkeit, mit der das Werkstück in den Elektrolytbehälter eingetaucht wird, einstellt.

Die bekannten Verfahren zur plasmaelektrolytischen Behandlung elektrisch leitfähiger Oberflächen, die ein Elektrolytbad nutzen, weisen hinsichtlich der bearbeitbaren Werkstückgeometrie entscheidende Grenzen auf. Zunächst erfordert eine stabile Prozessführung, dass die sich ausbildenden und aufsteigenden Gasblasen in Form einer gleichmäßigen Dampfhaut an der Werkstückkontur entlangströmen können. Dies ist bei komplexen Bauteilen, insbesondere an stark konkaven Flächen oder konturvertiefenden Strukturen mit einem hohen Aspektverhältnis regelmäßig nicht der Fall, z. B. bei Bohrungen, Hohlräumen und gezogenen Profilen mit einem geringen Konturabstand. Es kommt dann nicht zu einem stabilen, verfahrenstypischen Materialabtrag, sodass die plasmaelektrolytische Bearbeitung in diesen Fällen für industrielle Prozesse vielfach nicht einsetzbar ist.

Ein weiterer Nachteil besteht darin, dass die erforderliche Stromstärke proportional zur Bauteiloberfläche bereitgestellt werden muss, da das zugrundeliegende Wirkprinzip eine werkstoff- und elektrolytspezifische Stromdichte auf der Werkstückoberfläche erfordert, die typischerweise im Bereich von 0,2 A/cm² bis 0,5 A/cm² liegt. Abhängig von der für eine Bearbeitungsanlage in einem durchschnittlichen Industriebetrieb zur Verfügung stehenden Leistung ist dem Verfahren somit eine technologisch-wirtschaftliche Grenze hinsichtlich der Bauteilgröße gesetzt, die nur selten die Dimension eines Würfels mit 20 cm Kantenlänge überschreitet. Zudem ist so der Einsatz plasmaelektrolytischer Bearbeitungsverfahren für große Bauteile, die große Bearbeitungsanlagen erfordern, oftmals unwirtschaftlich. Dies gilt vor allem dann, wenn anstelle der gesamten Bauteiloberfläche nur einzelne Flächen oder Konturen, wie etwa beim Entgraten, bearbeitet werden sollen. Die für das plasmaelektrolytische Polieren im Elektrolytbad inhärente Bearbeitung der Gesamtoberfläche führt dann regelmäßig zu einem Vielfachen des Strombedarfs, des Investitionsbedarfs und des Bearbeitungsaufwandes, als es für die Erfüllung der Oberflächenanforderungen erforderlich wäre.

Ein Ansatz, die Begrenzung der bearbeitbaren Bauteilgröße zu umgehen, ist die Überführung in ein selektives Verfahren, wie er aus der DE 10 2014 108 447 A1 bekannt ist. Diese offenbart eine Anlage zum selektiven Plasmapolieren und/oder Reinigen der elektrisch leitenden Oberfläche von Bauteilen, insbesondere von Blechen und Folien, welche über wenigstens eine kathodisch gepolte Polierwanne verfügt, die über ein Pumpensystem mit dem Elektrolyten versorgt wird. Das anodisch gepolte Werkstück wird nun durch diese Wanne hindurchgeführt, wobei quer zum Werkstück verlaufende Isolierleisten die mit dem Elektrolyten in Kontakt stehende Fläche begrenzen, und so ein nur selektiv wirkendes Polierbad erzeugen. Während eine solche Vorrichtung die Verfahrensgrenze der maximalen Bauteilgröße aufhebt, bleiben geometrisch komplexe Bauteile hiermit nicht oder nur sehr eingeschränkt bearbeitbar. Zudem erlaubt sie auch keine selektive Bearbeitung einzelner Flächen abseits eines eindimensional definierten Gesamtabschnitts.

Aus diesem Grund sieht ein spezielles plasmaelektrolytische Bearbeitungsverfahren, das sogenannte Jet-Plasmapolieren, den Einsatz eines Elektrolytstrahls anstatt eines Elektrolytbades vor, wobei in diesem Fall die Elektrolytdüse, die einen Elektrolytstrahl auf das Werkstück richtet, gleichzeitig die Kathode bildet. Zu einem Materialabtrag kommt es lediglich an der Stelle, an der der Elektrolytstrahl auf die Oberfläche des Werkstücks auftrifft. Die maximal erforderliche Stromstärke wird dadurch begrenzt und die Bearbeitung lässt sich auf ausgewählte Stellen fokussieren.

Eine Anlage zur Umsetzung des zuvor beschriebenen Verfahrens ist aus der DE 20 2019 001 138 U1 bekannt. Dieses Dokument beschreibt eine Anlage zum Plasmapolieren einer elektrisch leitfähigen Oberfläche eines Werkstücks, wobei die Anlage eine Halteeinrichtung zum Halten des Werkstücks sowie einen Elektrolytbehälter, aus dem der Elektrolyt zu einer Düseneinheit gefördert wird, aufweist. Mithilfe der Düseneinheit wird zur Bearbeitung der Werkstückoberfläche ein auf die zu bearbeitende Oberfläche gerichteter Elektrolytstrahl erzeugt. Dieser kann sowohl als Freistrahl außerhalb des Elektrolytbeckens auf das Werkstück gerichtet und zur plasmaelektrolytischen Bearbeitung eingesetzt werden (Jet-Plasmapolieren), als auch im Elektrolytbehälter selbst positioniert sein. In zweiterem Fall erfolgt die Bearbeitung des Werkstücks, wie aus dem Stand der Technik bekannt, im Elektrolytbad (Bad-Plasmapolieren), wobei die gerichtete Strömung des Elektrolyten auf eine Fläche des Werkstücks die Ausprägung der Dampfhaut und somit die Prozessführung gezielt beeinflusst.

Nachteilig an der beschriebenen Anlage ist, dass lediglich vergleichsweise kleine Bereiche einer Werkstückoberfläche bearbeitet werden, die Bearbeitung größerer Flächen daher viel Zeit benötigt und auch die Bearbeitung komplexer Konturen nicht zufriedenstellend erfolgen kann.

Ausgehend von den aus dem Stand der Technik bekannten Vorrichtungen und Verfahren zur plasmaelektrolytischen Bearbeitung von Werkstückoberflächen liegt der Erfindung die Aufgabe zu Grunde, eine technische Lösung anzugeben, mit der vergleichsweise große Flächen und/oder unterschiedliche, komplexe Konturen auf geeignete Weise plasmaelektrolytisch bearbeitet werden können. Insbesondere sollten sich auch bei Werkstücken mit unterschiedlicher Geometrie und/oder komplexer Oberflächenkontur schnell, prozesssicher und wiederholbar qualitativ hochwertige Oberfläche erzeugen lassen. Auch das Entgraten vergleichsweise großer Bauteile sollte sowohl unter Berücksichtigung technischer, als auch wirtschaftlicher Randbedingungen sinnvoll realisierbar sein.

Die anzugebende technische Lösung sollte generell für den Einsatz in industriellen Prozessen, insbesondere in der Serienfertigung, geeignet sein und sich mit verhältnismäßig einfachen Mitteln und wirtschaftlich sinnvoll in eine Industrieproduktion integrieren lassen. Im Weiteren sollte die anzugebende technische Lösung geeignet sein, um ohne erheblichen konstruktiven Aufwand an unterschiedliche Bearbeitungsaufgaben, insbesondere an die Bearbeitung unterschiedlich geformter Werkstücke, angepasst werden zu können. Ferner sollte eine Bearbeitungsanlage angegeben werden, die unter Berücksichtigung der bekannten Konstruktionsprinzipien und unter wirtschaftlichen Gesichtspunkten effektiv herstellbar und betreibbar ist. Hierbei sollten sowohl der Energiebedarf, der für die plasmaelektrolytischen Bearbeitung von Werkstücken mit unterschiedlich geformten Werkstückoberflächen erforderlich ist, minimiert werden und darüber hinaus Stromstärkespitzen auf möglichst einfache Weise begrenzbar sein.

Die zuvor beschriebene Aufgabe wird mit einer Vorrichtung gemäß Anspruch 1 sowie einem Verfahren nach Anspruch 13 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Die Erfindung betrifft eine Vorrichtung zur plasmaelektrolytischen Bearbeitung einer elektrisch leitfähigen, insbesondere einer metallischen Oberfläche eines Werkstücks, die über eine Ausbringungseinheit zur Beaufschlagung der Oberfläche mit einem Elektrolytstrahl, über eine Versorgungseinheit zur wenigstens zeitweisen Versorgung der Ausbringungseinheit mit dem zur Erzeugung der Elektrolytstrahlen erforderlichen Elektrolyten, über wenigstens eine Elektrode, die während der Bearbeitung eine Gegenelektrode zur Oberfläche, insbesondere eine Kathode, bildet und über wenigstens eine Einheit, mit der während der Bearbeitung die Elektrode und die Oberfläche derart mit elektrischer Energie versorgbar sind, dass zwischen der Elektrode und der zu bearbeitenden Oberfläche bei Berührung durch den Elektrolyten ein Strom fließt, verfügt. Erfindungsgemäß zeichnet sich die Vorrichtung dadurch aus, dass die Ausbringungseinheit ausgebildet ist, um die Oberfläche des Werkstücks zeitgleich oder zeitlich nacheinander mit einem ersten und wenigstens einem zweiten Elektrolytstrahl, die unterschiedliche Strahlformen, Strahlrichtungen, Strahlwirkbereiche, Anordnungen im Raum, Strahlzusammensetzungen und/oder Strömungseigenschaften aufweisen, zu beaufschlagen. Der wesentliche Gedanke der Erfindung beruht somit darauf, eine Ausbringungseinheit vorzusehen, über die zeitgleich oder nacheinander zumindest zwei Strahlen mit unterschiedlichen Eigenschaften, insbesondere aus unterschiedlichen Richtungen und mit unterschiedlichen Wirkbereichen, auf die zu bearbeitende Werkstückoberfläche aufbringbar sind. Unter einem Strahlwirkbereich ist in diesem Zusammenhang ein Bereich der zu bearbeitenden Oberfläche eines Werkstücks zu verstehen, auf den ein Elektrolytstrahl auftrifft, sodass sich wenigstens eine Oberflächeneigenschaft in diesem Bereich zumindest teilweise ändert. Wesentlich ist hierbei, dass die Oberfläche eines Werkstücks gleichzeitig oder nacheinander mithilfe von wenigstens zwei Elektrolytstrahlen, die sich hinsichtlich wenigstens einer Eigenschaft, ihrer Ausrichtung, ihrer Anordnung im Raum und/oder des Strahlwirkbereichs, auf den die wenigstens zwei Elektrolytstrahlen einwirken, unterscheiden.

Auf besondere Weise sind die wenigstens zwei Elektrolytstrahlen derart ausgerichtet oder auszurichten, dass deren Projektionsfläche zumindest bereichsweise der Form und/oder Kontur der zu bearbeitenden Oberfläche entspricht. Unter Bearbeitung wird im Zusammenhang mit der Erfindung ein Materialabtrag des Oberflächenmaterials, eine Reinigung, eine Veränderung wenigstens einer Eigenschaft der Oberflächenschicht und/oder eine Aufbringung eines Werkstoffs auf die Oberfläche, insbesondere ein Polieren, Entgraten, Oxidieren, Entfetten und/oder Entölen, verstanden. In Bezug auf die Versorgungseinheit ist es von Vorteil, wenn diese über wenigstens ein Förderelement, beispielsweise in Form einer Kreisel-, Flügelrad- oder Zahnradpumpe verfügt, das eine zumindest nahezu pulsationsfreie Förderung des Elektrolyten zur Ausbringungseinheit ermöglicht. Dies ist vorteilhaft, da Pulsationen eines auf die Werkstückoberfläche ausgebrachten Elektrolytstrahls die stabile Ausbildung der Dampfhaut auf der Werkstückoberfläche beeinträchtigen.

Generell ist es in diesem Zusammenhang denkbar, dass es sich bei der Vorrichtung um eine stationäre oder eine portable Vorrichtung zur geeigneten Bearbeitung von elektrisch leitfähigen, insbesondere metallischen Oberflächen handelt. Es ist somit denkbar, dass die Anlage als stationäre Werkzeugmaschine zur Bearbeitung von Werkstückoberflächen oder aber als portable, bevorzugt handführbare Werkzeugmaschine, die zudem jeweils zum bearbeitenden Werkstück verbracht wird, ausgeführt ist. Mithilfe der erfindungsgemäßen technischen Lösung ist es somit auf vergleichsweise einfache Weise möglich, eine gegebene Kontur einer elektrisch leitfähigen Werkstückoberfläche, bevorzugt automatisiert plasmaelektrolytisch zu bearbeiten, insbesondere zu polieren und/oder zu entgraten. Aufgrund der flexiblen Ausgestaltung der erfindungsgemäßen Vorrichtung können im dreidimensionalen Raum zeitgleich oder in zeitlichem Abstand zueinander Elektrolytstrahlen mit unterschiedlichen Eigenschaften auf eine zu bearbeitende Oberfläche aufgebracht werden.

Gemäß einer bevorzugten Ausführungsform ist die Ausbringungseinheit hierbei derart ausgebildet, dass zeitgleich oder in zeitlichem Abstand wenigstens zwei Elektrolytstrahlen aus unterschiedlicher Richtung auf die zu bearbeitende Werkstückoberfläche aufbringbar sind. Bevorzugt verfügt die Ausbringungseinheit in diesem Fall über wenigstens zwei Austrittsöffnungen, insbesondere Düsen, über die ein Elektrolytstrahl zielgerichtet auf die zu bearbeitende Werkstückoberfläche aufbringbar ist. Die Austrittsöffnungen sind vorzugsweise derart angeordnet oder anzuordnen, dass Oberflächen mit unterschiedlichen Konturen in einem prozessspezifischen Winkel mit zumindest einem der Elektrolytstrahlen zur Oberflächenbearbeitung beaufschlagt werden können. Dieser Winkel ist bevorzugt so zu wählen, dass der Elektrolytstrahl entlang der Oberflächen- oder Konturnormale ausgerichtet ist. Unter anderem aufgrund der Zugänglichkeit, der Flächengeometrie oder des Bearbeitungsziels kann es aber auch von Vorteil sein, einen abweichenden Winkel zu wählen. Denkbar ist in diesem Zusammenhang, dass die gesamte Ausbringungseinheit und/oder einzelne Austrittsöffnungen gezielt bewegbar sind.

In einer speziellen Weiterbildung der Erfindung ist vorgesehen, dass die Ausbringungseinheit wenigstens ein Stellelement aufweist, durch das Strahlform, Strahlrichtung, Strahlwirkbereich, Strahlzusammensetzung und/oder eine Strömungseigenschaft des Elektrolytstrahls veränderbar ist. Ein derartiges Stellelement stellt somit sicher, dass Elektrolytstrahlen mit unterschiedlichen Eigenschaften und an den jeweiligen Bedarf bzw. die jeweilige Bearbeitungsaufgabe angepasst auf die Oberfläche eines Werkstücks aufbringbar sind. Denkbar ist in diesem Zusammenhang, dass ein derartiges Stellelement ausgebildet ist, um die Größe, Form und/oder Ausrichtung einer Austrittsöffnung, insbesondere einer Düse, bedarfsgerecht zu verändern. So ist es generell denkbar die Ausrichtung eines Elektrolytstrahls, die Strahlform, die Strömungsgeschwindigkeit und/oder den Volumenstrom mithilfe einer derartigen Austrittsöffnung zu variieren. Auch eine zumindest zeitweise Unterbrechung oder eine gepulste Ausbringung wenigstens eines der Elektrolytstrahlen ist vorstellbar.

Alternativ oder in Ergänzung ist es denkbar, dass das Stellelement über wenigstens ein Ventil und/oder eine Dosiereinheit verfügt, durch die eine Zusammensetzung des durch die Ausbringungseinheit ausgebrachten Elektrolytstrahls veränderbar ist. Ebenso ist es vorstellbar, dass ein Stellelement wenigstens ein Stellorgan, ein Mischelement und/oder ein Heizelement aufweist, um auf geeignete Weise die Strömungseigenschaften und/oder die Temperatur des Elektrolyten gezielt an die Anforderungen der jeweils gestellten Bearbeitungsaufgabe anzupassen. Für das Plasmapolieren ist eine Elektrolyttemperatur von 60 °C bis 95 °C vorzugswürdig, da so die einzubringende Energie bis zum Verdampfen des Elektrolyten reduziert wird. Dies kann zum Beispiel durch Einschraubheizkörper, Durchlauferhitzer, Keramikheizkörper oder eine Kombination hieraus realisiert werden. Hingegen ist z. B. das plasmaelektrolytische Oxidieren auch mit Elektrolyten bei Raumtemperatur möglich.

In einer weiteren speziellen Ausgestaltung der Erfindung ist wenigstens eine Messeinheit zur kontinuierlichen oder diskontinuierlichen Messung wenigstens einer Eigenschaft der Oberfläche, zur Bestimmung eines Abstandes zwischen der Ausbringungseinheit und/oder einer Austrittsöffnung der Ausbringungseinheit und der Oberfläche und/oder zur Bestimmung der Relativposition der Ausbringungseinheit (4) zur Oberfläche vorgesehen. Weiterhin ist bevorzugt zumindest eine Steuereinheit vorgesehen, durch die in Abhängigkeit einer Eigenschaft der Werkstückoberfläche, eines von der Messeinheit generierten Messwerts und/oder eines Sollwerts ein Steuersignal generierbar und an die Ausbringungseinheit zur Veränderung der Strahlform, Strahlrichtung, des Strahlwirkbereichs, der Strahlzusammensetzung, der Anordnung der Elektrolytstrahlen im Raum, der Aktivierung oder Deaktivierung wenigstens eines Elektrolytstrahls und/oder einer Strömungseigenschaft zumindest eines der Elektrolytstrahlen übertragbar ist. Eine derartige Steuereinheit, die auf vorteilhafte Weise frei programmierbar ist, ermöglicht somit einen besonders flexiblen Einsatz einer erfindungsgemäß ausgeführten Vorrichtung. Die Steuereinheit ist bevorzugt derart ausgeführt, dass die einzelnen erforderlichen Prozessparameter, wie etwa Temperatur, Strömungsform, Strömungsgeschwindigkeit, Volumenstrom und/oder Zusammensetzung wenigstens eines der Elektrolytstrahlen bedarfsgerecht veränderbar ist. Alternativ oder in Ergänzung kann vorgesehen sein, dass die Steuereinheit ausgebildet ist, um die zwischen Elektrode und Werkstückoberfläche anliegende Spannung bedarfsgerecht zu variieren, insbesondere die Spannung auf einen Wert oberhalb oder unterhalb eines Grenzwertes festzulegen. Auf vorteilhafte Weise ist der Grenzwert so gewählt, dass bei einer Spannung oberhalb des Grenzwerts eine plasmaelektrolytische Bearbeitung der Werkstückoberfläche erfolgt, während bei einer Spannung unterhalb des Grenzwerts eine elektrochemische Bearbeitung der Werkstückoberfläche erfolgt. So kann beispielsweise zunächst elektrochemisch die Rauheit mit hoher Abtraggeschwindigkeit reduziert werden, um dann durch einen Wechsel der Spannung plasmaelektrolytisch eine hochwertige, glänzende Oberfläche zu erzeugen.

Besonders vorteilhaft ist eine Kombination einer derartigen Steuereinheit mit wenigstens einem der zuvor beschriebenen Stellelemente, um besonders flexibel und effektiv wenigstens zwei Elektrolytstrahlen mit unterschiedlichen Eigenschaften erzeugen und auf die zu bearbeitende Werkstückoberfläche aufbringen zu können und/oder durch Veränderung der Spannung die Art der Oberflächenbearbeitung zu verändern.

In einer weiteren speziellen Ausgestaltung der Erfindung weist diese wenigstens eine Messeinheit zur kontinuierlichen oder diskontinuierlichen Messung wenigstens einer Eigenschaft der Werkstückoberfläche, insbesondere der Oberflächenrauheit, und/oder zur kontinuierlichen oder diskontinuierlichen Bestimmung der Relativposition der Ausbringungseinheit zur Oberfläche auf. In einer vorteilhaften Ausführung ist die Messeinheit auf den Strahlwirkbereich ausgerichtet. Alternativ oder in Ergänzung hierzu können insbesondere bei einer vorgesehenen Relativbewegung der Ausbringungseinheit zur Werkstückoberfläche wenigstens zwei Messeinheiten vorgesehen sein, die zumindest einen Bereich vor und einen nach dem Strahlwirkbereich erfassen. Die Eigenschaften der Oberfläche können insbesondere optisch, zum Beispiel durch eine Glanzmessung über eine Kamera oder die laserbasierte Aufnahme eines Rauheitsprofils erfasst werden. Für die Bestimmung der Relativposition kommt zudem auch unter anderem eine Messung über Ultraschall in Betracht.

Besonders vorteilhaft ist eine Kombination einer derartigen Messeinheit mit wenigstens einer der zuvor beschriebenen Steuereinheiten und einem der zuvor beschriebenen Stellelemente, um die Messergebnisse unmittelbar zur Steuerung des Bearbeitungsprozesses einsetzen zu können. So kann beispielsweise die Relativgeschwindigkeit der Ausbringungseinheit zur Oberfläche, die Bearbeitungsspannung oder die Strahlzusammensetzung des Elektrolyten in Abhängigkeit eines Vergleichs der Messung der Messeinheit zu einem Zielzustand verändert werden. Zudem erlaubt eine solche Anordnung die kontinuierliche Aufzeichnung von Daten zum Zwecke der effektiven Qualitätssicherung.

Gemäß einer weiteren besonders geeigneten Ausführungsform der Erfindung verfügt die Ausbringungseinheit über wenigstens zwei Austrittöffnungen, insbesondere über zwei Düsenelemente, zur Ausbringung von Elektrolytstrahlen. Vorzugsweise sind diese Austrittsöffnungen und/oder die diese bildenden Elemente, bewegbar angeordnet, unterschiedlich dimensioniert, separat von der Versorgungseinheit mit dem Elektrolyten versorgbar und/oder derart ausgebildet, dass wenigstens zwei Elektrolytstrahlen mit unterschiedlichen Strahlformen und/oder Strömungseigenschaften auf die Werkstückoberfläche aufzubringen sind.

Die Ausbringungseinheit lässt sich gemäß der Erfindung in Abhängigkeit der jeweiligen Bearbeitungsaufgabe flexibel und dennoch mit vergleichsweise einfachen Mitteln an die bestehenden Anforderungen, insbesondere den zu bearbeitenden Werkstoff und die Oberflächenkontur anpassen. Hierbei ist es im Weiteren generell denkbar, dass geeignete Fixier- und/oder Bewegungseinrichtungen vorgesehen sind, um eine Relativbewegung zwischen der zu bearbeitenden Werkstückoberfläche und der Ausbringungseinheit, insbesondere wenigstens einer Austrittsöffnung für einen Elektrolytstrahl herzustellen. Eine entsprechende Relativbewegung kann etwa initiiert werden, indem wahlweise das Werkstück, dessen Oberfläche zu bearbeiten ist, und/oder zumindest teilweise die Ausbringungseinheit bewegt wird.

In einer weiteren besonderen Ausgestaltung der Erfindung ist vorgesehen, dass die Ausbringungseinheit und/oder zumindest Teile der Versorgungseinheit, insbesondere solche zum Auffangen des bereits auf das Werkstück aufgebrachten Elektrolyten, an wenigstens einem Roboterarm angeordnet sind. Auf diese Weise lässt sich durch Nutzung eines Industrieroboters eine besonders flexible Bewegung der Ausbringungseinheit relativ zu der zu bearbeitenden Werkstückoberfläche ermöglichen. Alternativ hierzu ist auch der Einsatz einer Achskinematik möglich.

Gemäß einer speziellen Weiterbildung der Erfindung ist wenigstens eine Verstelleinheit zur Veränderung eines Abstandes zwischen der zu bearbeitenden Oberfläche des Werkstücks und wenigstens einer Austrittsöffnung der Ausbringungseinheit und/oder einer relativen Anordnung wenigstens einer Austrittsöffnung der Ausbringungseinheit und der zu bearbeitenden Werkstückoberfläche vorgesehen. Auf vorteilhafte Weise lassen sich geeignete Bewegungen der Ausbringungseinheit und/oder des Werkstücks mithilfe eines Roboterarms und/oder einer Achskinematik initiieren. Mit einer derartigen Verstelleinheit lässt sich somit die Größe des von wenigstens einem Elektrolytstrahl zu überwindenden Spalts zwischen wenigstens einer der Austrittsöffnungen und der zu bearbeitenden Oberfläche gezielt einstellen. Auf diese Weise lässt sich nicht nur die Kraft, mit der ein Elektrolytstrahl auf die Werkstückoberfläche auftrifft und so die Ausprägung der Dampfhaut beeinflussen, sondern auch der bei einer vorgegebenen elektrischen Spannung anfallende Polierstrom sowie die zur Erzeugung eines erforderlichen Polierstroms benötigte elektrische Spannung gezielt einstellen. Ein geringer Abstand ist hinsichtlich der Geometrietreue der Strahlform zur Austrittsöffnung insbesondere bei nicht entlang der Schwerkraft verlaufenden Elektrolytstrahlen vorteilhaft. Allerdings muss hierbei ein Mindestabstand beachtet werden, damit es nicht zu einem Funkenüberschlag kommt.

Gemäß einer weiteren speziellen Ausgestaltung der Erfindung ist vorgesehen, dass der während der Bearbeitung der Werkstückoberfläche fließende Polierstrom gemessen wird. Der entsprechende Messwert kann dann auf geeignete Weise zur Steuerung oder sogar Regelung des Bearbeitungsprozesses genutzt werden In einer besonderen Weiterbildung ist diesbezüglich vorgesehen, dass wenn die gemessene Stromstärke des Polierstroms einem Zielwert entspricht, von einem zumindest nahezu fehlerfrei laufenden Prozess ausgegangen wird. Verändert sich die Stromstärke dagegen zeitweise stark, also schlägt der entsprechende Wert immer wieder stark, insbesondere nach oben in Richtung eines größeren Werts, aus, wird vorzugsweise darauf geschlossen, dass die Dampfhaut zusammenbricht und es danach zu einer Neuzündung kommt. Auf diese Weise lässt sich vorteilhaft eine Qualitätssicherung realisieren und/oder die erhaltenen Messwerte und/oder daraus abgeleitete Werte können zur Veränderung einer Eigenschaft des Stellelements und/oder des Stellmittels und damit zur gezielten und bedarfsgerechten Beeinflussung des Oberflächenbearbeitungsprozesses genutzt werden.

In einer weiteren besonders speziellen Ausgestaltung der Erfindung ist vorgesehen, dass eine Elektrode, bevorzugt eine Kathode, den Elektrolytstrahl wenigstens bereichsweise umgibt. Auf vorteilhafte Weise ist die Elektrode hierbei etwa als elektrisch leitfähiges Rohrstück ausgeführt, das im Bereich der Austrittsöffnung den Elektrolytstrahl umgibt und so auf geeignete Weise die Elektrode bildet. In diesem Zusammenhang ist es denkbar, dass die Ausbringungseinheit elektrisch isolierend ausgebildet ist und zumindest einzelne elektrisch leitfähige Bereiche aufweist, die im Betrieb als Elektroden, insbesondere Kathoden, die Gegenelektroden zu der zu bearbeitenden Werkstückoberfläche bilden. Die elektrisch leitfähigen Bereiche der Ausbringungseinheit sind bevorzugt als Rohrstücke ausgeführt, wobei am Ende der Rohrstücke die jeweilige Austrittsöffnung für den Austritt eines Elektrolytstrahls vorgesehen ist. Während eines Bearbeitungsvorgangs ist es denkbar, dass durch gezieltes Zu- und Abschalten der an der Ausbringungseinheit vorgesehenen elektrisch leitfähigen Bereiche das elektrische Feld und damit die zu bearbeitenden Bereiche der Werkstückoberfläche variiert werden. Ebenso ist es denkbar, dass die gesamte Ausbringungseinheit elektrisch leitfähig ausgebildet ist und während eines Bearbeitungsvorgangs die Elektrode der erfindungsgemäßen Vorrichtung bildet. Anzahl und Ausführung der Elektroden ziehen dabei stets in Betracht, dass die Kathodenfläche für den sicheren und stabilen Betrieb einer Anlage zum Plasmapolieren größer sein sollte als die Anodenfläche, wobei ein Verhältnis von mindestens 5:1 zu bevorzugen ist.

Gemäß einer alternativen oder ergänzenden Ausführungsform ist der Durchfluss eines Elektrolyten an zumindest einer Austrittsöffnung der Ausbringungseinheit bedarfsgerecht zu- und abschaltbar, also pulsbar.

In einer weiteren speziellen Ausführungsform ist vorgesehen, dass eine Versorgung der Elektrode sowie der zu bearbeitenden Oberfläche mit elektrischer Energie mithilfe wenigstens eines Stellmittels veränderbar ist. In diesem Zusammenhang ist es denkbar, dass das Stellmittel derart ausgebildet ist, dass die Versorgung mit elektrischer Energie zumindest zeitweise vollständig unterbrochen wird oder aber lediglich eine Veränderung der Stromstärke oder Spannung erfolgt. Bevorzugt wird zwischen der Elektrode und der zu bearbeitenden Oberfläche eine Gleichspannung von 200 V bis 450 V angelegt. Auf diese Weise lässt sich eine Werkstückoberfläche besonders geeignet polieren und/oder entgraten. Wird eine Spannung abgesenkt, zum Beispiel auf einen Wert von 120 V, wird die Werkstückoberfläche nicht mehr plasmaelektrolytisch, sondern eher elektrochemisch bearbeitet. Da bei einer elektrochemischen Bearbeitung ein größerer Materialabtrag pro Zeiteinheit an der Werkstückoberfläche erfolgt, kann durch Veränderung der Spannung die Art der Bearbeitung, insbesondere die Größe bzw. Schnelligkeit des Materialabtrags, gezielt verändert werden.

Gemäß einer besonderen Ausführungsform der Erfindung weist die Versorgungseinheit eine Elektrolytzufuhr, über die der Ausbringungseinheit Elektrolyt zugeführt wird, eine Elektrolytabfuhr, über die von der Ausbringungseinheit ausgebrachter Elektrolyt wenigstens teilweise abgeführt wird und eine Aufbereitungseinheit, über die wenigstens eine Eigenschaft des abgeführten Elektrolyten, insbesondere die Temperatur, der pH-Wert, die Leitfähigkeit und/oder die Trübung, veränderbar ist, auf. Die Versorgungseinheit gemäß dieser Ausführungsform ist auf vorteilhafte Weise derart ausgeführt, dass der Elektrolyt zunächst von der Ausbringungseinheit auf die zu bearbeitende Werkstückoberfläche aufgebracht, anschließend aufgefangen und auf vorteilhafte Weise wieder aufbereitet wird, damit der Elektrolyt erneut zur Bearbeitung der Werkstückoberfläche verwendet werden kann. Vorzugsweise verfügt die Elektrolytabfuhr über eine Gebläseeinheit, Drucklufteinheit und/oder eine Absaugung, sodass der Elektrolyt nach Auftreffen auf die zu bearbeitende Oberfläche abgesogen und/oder weggeblasen wird. Vorzugsweise wird der Elektrolyt, der auf die Oberfläche aufgetroffen ist, gezielt abgesaugt oder weggeblasen und über eine Abführung abgeführt, sodass dieser unter Umständen nach einer Aufbereitung wiederverwendet werden kann. Auf diese Weise wird verhindert, dass in umliegenden Bereichen Abtragerscheinungen außerhalb der anvisierten Wirkfläche auftreten.

Von Vorteil ist es in diesem Zusammenhang, wenn wenigstens eine Sensoreinheit vorgesehen ist, mit der zumindest eine Eigenschaft des Elektrolyten, vor allem die Leitfähigkeit, der pH-Wert, die Trübung und/oder die Temperatur erfassbar ist. Auf diese Weise ist es beispielsweise denkbar, dass über eine Leitfähigkeitsmessung der Salzgehalt des verwendeten Elektrolyten gemessen und bedarfsgerecht mithilfe einer geeigneten Dosiereinheit wieder auf das benötigte Maß angehoben wird. Ebenso können weitere Maßnahmen eingeleitet werden, wie etwa die geeignete Zudosierung wenigstens eines pH-Regulators und/oder die Reinigung des Elektrolyten, etwa mithilfe geeigneter Filterelemente, wie etwa ein Zyklonabscheider, Filter, oder die Zudosierung chemisch wirksamer Substanzen.

Mithilfe einer Elektrolytaufbereitung lässt sich eine Nutzung des Elektrolyten über einen vergleichsweise langen Zeitraum und damit ein besonders wirtschaftlicher Betrieb der erfindungsgemäßen Vorrichtung realisieren. In diesem Zusammenhang ist es von Vorteil, wenn die erfindungsgemäße Vorrichtung über Behälter zur Bevorratung von Stoffen, die für eine Zudosierung und/oder Reinigung benötigt werden, verfügt. Alternativ oder in Ergänzung ist eine Reinigungseinheit vorgesehen, die eine Reinigung der Ausbringungseinheit und/oder der Austrittsöffnungen ermöglicht, wobei eine Reinigung bevorzugt erfolgt, sobald der Elektrolyt gewechselt wird.

In einer weiteren Ausführungsform der Erfindung verfügt die Vorrichtung über wenigstens einen Emitter, mit dem wenigstens zeitweise Schallwellen und/oder elektromagnetische Wellen in zumindest einen der Elektrolytstrahlen einkoppelbar sind. Mithilfe eines derartigen Emitters ist es möglich, Schallwellen und/oder elektromagnetische Wellen in zumindest einen Elektrolytstrahl einzukoppeln, insbesondere um die Bearbeitung der Werkstückoberfläche zu verändern bzw. einen zusätzlichen Krafteintrag in die Oberfläche zu bewirken. Eine entsprechende Einwirkung auf die Oberfläche kann somit mithilfe von Schallwellen, insbesondere zur Beeinflussung der Ausbildung der Dampfhaut, oder mit geeigneter elektromagnetischer Strahlung, beispielsweise energiereicher Laserstrahlung erfolgen. Ebenso ist es denkbar, in zumindest einen der Elektrolytstrahlen einen Lichtstrahl mit einer bestimmten Farbe, etwa mittels einer LED, einzukoppeln, um so beispielsweise einen Hinweis auf das Anliegen der Bearbeitungsspannung und das Bestehen einer entsprechenden Gefahr bei Berührung für den Bediener zu geben. Eine entsprechender, in wenigstens einen Elektrolytstrahl eingekoppelter Lichtstrahl kann somit einen Warnhinweis für einen Benutzer darstellen und bildet auf vorteilhafte Weise einen Teil einer besonderen Sicherheitseinrichtung.

Gemäß einer besonderen Ausführungsform der Erfindung ist vorgesehen, dass eine erfindungsgemäße Vorrichtung mit weiteren Komponenten kombiniert wird, insbesondere um eine effektive Integration in einen industriellen Fertigungsprozess, verbunden mit einem wartungsfreien Betrieb über einen möglichst langen Zeitraum, realisieren zu können. In einer besonderen Ausgestaltung ist ein Elektrolytkonzentratbehälter zur Bevorratung zumindest eines Konzentrats vorgesehen, wobei durch Mischen des Konzentrats mit Wasser, bevorzugt mit deionisiertem Wasser, auf vorteilhafte Weise der prozessfertige Elektrolyt hergestellt wird. Eine entsprechende Herstellung kann bevorzugt automatisiert durchgeführt werden. Ebenso ist es denkbar, einen entsprechenden Herstellungsprozess durch den zuvor beschriebenen Aufbereitungsprozess zu ergänzen. Eine Einrichtung zur vorzugsweise kontinuierlich durchgeführten Aufbereitung kann hierbei wiederum spezielle Bauelemente, wie etwa eine Filteranlage für Schwebepartikel, insbesondere mit einem Zyklonfilter, eine Dosiereinheit zur Zudosierung von Fällungsmitteln und/oder eine Elektrolysezelle aufweisen.

Alternativ oder in Ergänzung kann ein Behälter zur Bevorratung von pH-Regulatoren vorgesehen sein, um den Elektrolyten mithilfe einer Dosiereinheit im Verlauf des Prozesses nachzusäuern. Weiterhin ist es denkbar, einen Vorratsbehälter für wenigstens ein Reinigungsmittel vorzusehen, sodass bevorzugt automatisiert die Ausbringungseinheit, vor allem die wenigstens eine Austrittsöffnung, zu reinigen ist. Vorzugsweise findet eine Reinigung bei einem Wechsel des Elektrolyten statt.

In einer speziellen Ausgestaltung der Erfindung sind Elemente zur Bewegung des Werkstücks vor, nach, oder während der Bearbeitung der Werkstückoberfläche vorgesehen, die gleichzeitig die Übertragung elektrischer Energie auf die zu bearbeitende Werkstückoberfläche ermöglichen. Derartige Bewegungsmittel können beispielsweise als Rollen, die mit einem geeigneten Druck gegen das Werkstück gedrückt werden, ausgeführt sein. Weiterhin ist es denkbar, eine Übertragung elektrischer Energie auf ein relativ zur Ausbringungseinheit bewegtes Werkstück mithilfe von Schleifkontakten zu realisieren.

Gemäß einer speziellen Weiterbildung der Erfindung ist zumindest eine Einheit vorgesehen, über die zumindest zeitweise Luft und/oder wenigstens ein Gas in zumindest einen der Elektrolytstrahlen einbringbar ist. Die ist von Vorteil, da Luft- oder Gasblasen in einem Elektrolytstrahl generell die Ausbildung der Dampfhaut auf der zu bearbeitenden Werkstückoberfläche begünstigen. Bevorzugt verfügt die Einheit zur Einbringung von Luft und/oder Gas in einen Elektrolytstrahl über wenigstens einen geeigneten Strahlregler. In diesem Zusammenhang ist es denkbar, dass wenigstens eine Austrittsöffnung der Ausbringungseinheit einen austauschbaren Einsatz aufweist, über die das Eindüsen oder Einsaugen von Luft und/oder Gas in einen Elektrolytstrahl im Bereich der Austrittsöffnung zumindest begünstigt wird. Alternativ verfügt zumindest eine der Austrittsöffnungen über eine geeignete Innenstruktur, insbesondere eine Oberflächenstruktur, die eine geeignete Zuführung von Luft und/oder Gas in den Elektrolytstrahl und/oder die Bildung von Luft- und/oder Gasblasen im Elektrolytstrahl ermöglicht.

Weiterhin ist es denkbar, dass im Bereich zumindest einer der Austrittsöffnungen einer Ausbringungseinheit ein elektrisch isolierender Abstandshalter vorgesehen ist, der den Elektrolytstrahl zumindest teilweise umschließt und die wirksame Austrittsöffnung des Freistrahls somit näher in Richtung der Werkstückoberfläche verschiebt. Der verbleibende Abstand kann bis auf null reduziert sein, sodass der Abstandshalter eine unmittelbare, elektrisch isolierende Verbindung zur Werkstückoberfläche herstellt. Bevorzugt ist ein derartiger Abstandhalter zumindest abschnittsweise rohrförmig ausgebildet, sodass der Elektrolytstrahl durch einen derartigen Abstandhalter auf die zu bearbeitende Werkstückoberfläche auftrifft. Es findet somit eine gezielte Aufbringung eines Elektrolytstrahls statt, bei der die durch den Freistrahl zu überwindende Distanz bis auf null reduziert sein kann.

In einer weiteren Ausgestaltung der Erfindung verfügt wenigstens eine Austrittsöffnung der Ausbringungseinheit auf ihrer Innenseite über eine geeignete Oberflächenstruktur, um eine gewünschte Strömungsform des Elektrolytstrahls herzustellen. Weiterhin ist es in diesem Zusammenhang denkbar, dass aufgrund einer strukturierten Oberfläche im Bereich der Austrittsöffnung die wirksame Kathodenoberfläche vergrößert wird. Als Oberflächenstrukturen sind hierbei sowohl deterministische Strukturen, wie etwa Netze, Gitter und/oder Rohrtexturierungen, als auch stochastische Strukturen, etwa in Form von gesinterten und/oder schwammartigen Strukturen, denkbar sind. Auch diese bevorzugt in Abhängigkeit der jeweiligen Bearbeitungsaufgabe gewählten Oberflächenstrukturen können in Form von austauschbaren Einsätzen in eine Austrittsöffnung einer Ausbringungseinheit einsetzbar sein.

Im Weiteren ist es von Vorteil, wenn zur Versorgung der erfindungsgemäßen Vorrichtung mit elektrischer Energie Speichereinheiten, wie etwa Akkumulatoren oder Kondensatoren, insbesondere Superkondensatoren, verwendet werden. Auf diese Weise ist es möglich Spitzenlasten der Stromstärke, die insbesondere während des Zündungsprozesses zu Beginn einer Bearbeitung auftreten können, zu minimieren. Entsprechende Spitzenlasten lassen sich wenigstens teilweise über derartige Speicher für elektrische Energie verringern. Auf diese Weise wird die Leistungsaufnahme einer erfindungsgemäßen Vorrichtung von der Leistungsabgabe des zur Verfügung stehenden elektrischen Netzes entkoppelt. Durch Einsatz wenigstens eines der zuvor beschriebenen elektrischen Speicher können unzulässige Belastungen des Stromnetzes eines Industriebetriebes ausgeschlossen werden und so ein sicherer, dauerhafter Betrieb einer erfindungsgemäßen Vorrichtung gewährleistet werden. Zudem ist es denkbar, die Speicherelemente so auszulegen, dass die durch sie zur Verfügung gestellte Stromstärke über einen längeren Zeitraum, insbesondere die Bearbeitungsdauer eines Werkstücks, aufrechterhalten werden kann. Auf diese Weise könnte z. B. eine aufgrund der Anschlussleistung auf 150 A Bearbeitungsstrom beschränkte Anlage durch ein entsprechendes Aufladen zur Bearbeitung von Werkstücken eingesetzt werden, die die Bereitstellung von 200 A Bearbeitungsstrom erfordern.

Neben einer Vorrichtung betrifft die Erfindung auch ein Verfahren zur plasmaelektrolytischen Bearbeitung einer elektrisch leitfähigen, insbesondere metallischen Oberfläche eines Werkstücks, bei dem wenigstens ein Elektrolyt zu einer Ausbringungseinheit gefördert wird, über die zumindest zeitweise eine Oberfläche eines Werkstücks mit einem Elektrolytstrahl beaufschlagt wird, und bei dem zwischen der zu bearbeitenden Oberfläche des Werkstücks und einer Elektrode, die wenigstens teilweise den Elektrolyten berühren, eine elektrische Spannung angelegt wird, sodass die Elektrode während der Bearbeitung eine Gegenelektrode, insbesondere Kathode, zur Oberfläche des Werkstücks, das bevorzugt die Anode darstellt, bildet. Das erfindungsgemäße Verfahren zeichnet sich dadurch aus, dass die Oberfläche des Werkstücks über die Ausbringungseinheit zeitgleich oder zeitlich nacheinander mit einem ersten und wenigstens einem zweiten Elektrolytstrahl, die unterschiedliche Strahlformen, Strahlrichtungen, Strahlwirkbereiche, Strahlzusammensetzungen und/oder Strömungseigenschaften aufweisen, beaufschlagt wird. Das erfindungsgemäße Verfahren zeichnet sich somit im Wesentlichen dadurch aus, dass die zu bearbeitende Oberfläche eines Werkstücks zeitgleich oder zeitlich nacheinander mit Elektrolytstrahlen unterschiedlicher Eigenschaften bearbeitet wird. Bei der Bearbeitung erfolgt wiederum ein Materialabtrag, eine Oberflächenreinigung, eine Änderung wenigstens einer Oberflächeneigenschaft und/oder ein Materialauftrag. Die Elektrolytstrahlen werden bevorzugt aus einer bewegbaren, vorzugsweise aus einer Mehrzahl bewegbarer Austrittsöffnungen in Richtung der zu bearbeitenden Werkstückoberfläche ausgebracht.

Gemäß einer besonderen Ausführungsform der Erfindung wird die zu bearbeitende Oberfläche mit Elektrolytstrahlen, die aus unterschiedlichen Richtungen auf die Oberfläche gelenkt werden, beaufschlagt. Die Elektrolytstrahlen können jeweils bedarfsgerecht unterbrochen und/oder Eigenschaften der Elektrolytstrahlen variiert werden. Im Weiteren ist es von Vorteil, wenn die zu bearbeitende Oberfläche des Werkstücks relativ zur Ausbringungseinheit bewegt wird. Eine Relativbewegung kann hierbei wahlweise dadurch erzeugt werden, dass die Ausbringungseinheit oder wenigstens eine Austrittsöffnung der Ausbringungseinheit und/oder das Werkstück bewegt werden. Mit dem erfindungsgemäßen Verfahren kann somit, insbesondere bei Einsatz einer Ausbringungseinheit mit einer Mehrzahl von Austrittsöffnungen, insbesondere Düsen, erreicht werden, dass ein Werkstück selbst bei vergleichsweise komplizierter Geometrie und Oberflächenkontur derart bearbeitet, beispielsweise entgratet wird, dass eine Oberfläche mit einer vergleichsweise hohen Oberflächengüte erzeugt wird.

In einer speziellen Ausführungsform der Erfindung wird der Elektrolyt wenigstens teilweise nach Ausbringung auf die Oberfläche des Werkstücks aufgefangen, der aufgefangene Elektrolyt durch Veränderung zumindest einer Eigenschaft aufbereitet und in aufbereitetem Zustand erneut auf die Oberfläche des Werkstücks aufgebracht. Gemäß dieser Ausführungsform wird der Elektrolyt in einem Kreislauf gefördert, wobei eine Zwischenspeicherung in einem Tank denkbar ist. Auf diese Weise ist eine besonders effektive Bearbeitung einer Werkstückoberfläche aufgrund der Nutzung eines Elektrolyten über einen vergleichsweise langen Zeitraum möglich. Im Weiteren ist es denkbar, dass Stoffe, die zur Aufbereitung und/oder Reinigung des Elektrolyten benötigt werden, in geeigneten Behältern bevorratet und bei Bedarf, bevorzugt unter Nutzung einer geeigneten Regelung oder Steuerung, insbesondere zur Erhöhung des Salzgehalts und/oder Reduzierung des pH-Werts, zudosiert werden.

Gemäß einer besonders speziellen Weiterbildung der Erfindung ist die Gestaltung der Ausbringungseinheit, insbesondere deren Form, die Anordnung der wenigstens einen Austrittsöffnung und/oder die Stellelemente zur Veränderung zumindest einer Eigenschaft eines Elektrolytstrahls, derart ausgeführt, dass die Außenkontur der Ausbringungseinheit und/oder die Projektionsflächen der ausgebrachten Elektrolytstrahlen die Form der zu bearbeitenden Oberfläche eines Werkstücks zumindest nahezu vollständig abbildet. Auf vorteilhafte Weise ist es hierbei denkbar, dass die Ausbringungseinheit stationär, beispielsweise an einem Maschinengestell, angeordnet ist und das zu bearbeitende Werkstück automatisiert oder teilautomatisiert eingefahren wird. Nachdem das Werkstück, dessen Oberfläche bearbeitet werden soll, positioniert worden ist, werden in diesem Fall bevorzugt die Versorgungseinheit, die Ausbringungseinheit und eine Spannungsquelle aktiviert, sodass zeitgleich oder nacheinander eine Mehrzahl von Elektrolytstrahlen auf die zu bearbeitende Oberfläche aufgebracht und eine Spannung zwischen der Elektrode und der Werkstückoberfläche angelegt wird. Aufgrund der Ausbildung einer teilionisierten Gashülle stabilisiert sich auf der Oberfläche des Werkstücks ein Plasma und es kommt zu der gewünschten Bearbeitung, insbesondere einem Materialabtrag.

Ebenso ist es denkbar, dass die Ausbringungseinheit und/oder einzelne Ausbringungsöffnungen zumindest zeitweise relativ zum Werkstück bewegt werden. So ist es denkbar, dass diese nach Einfahren des Werkstücks zunächst in eine Bearbeitungsposition bewegt werden und nach Abschluss des Bearbeitungsvorgangs wiederum in den Ausgangszustand verfahren werden. Weiterhin ist eine kontinuierliche Bearbeitung eines Werkstücks denkbar, bei der sowohl das Werkstück als zumindest Teile der Ausbringungseinheit, wie etwa einzelne Austrittsöffnungen bewegt werden. Generell ist eine kontinuierliche Bearbeitung eines Werkstücks, beispielsweise durch Verfahren des Werkstücks, als auch eine Bearbeitung in mehreren diskreten Schritten denkbar. Eine solche Aufteilung auf diskrete Bearbeitungsschritte kann bevorzugt so erfolgen, dass diese einen möglichst gleichen Bedarf an elektrischer Leistung aufweisen und das Netz durch das Verfahren möglichst gleichmäßig belastet wird.

Darüber hinaus ist es vorstellbar, dass zwischen einzelnen Bearbeitungsschritten die Elektrolytzufuhr und/oder die Energieversorgung zur Erzeugung einer elektrischen Spannung zumindest zeitweise unterbrochen wird, insbesondere um im Hinblick auf eine wirtschaftliche Fertigung einen optimalen Prozess realisieren zu können.

Auf vorteilhafte Weise lässt sich die erfindungsgemäße Vorrichtung sowie das erfindungsgemäße Verfahren für das Entgraten von metallischen Werkstücken einsetzen. Alternativ oder ergänzend ist es denkbar, dass mittels der erfindungsgemäßen Lösung Werkstückoberflächen poliert, sterilisiert und/oder gereinigt werden. Im Weiteren ist es denkbar, dass durch den Einsatz geeigneter Elektrolyte und die Festlegung geeigneter Prozessparameter, insbesondere für die zwischen Elektrode und Werkstückoberfläche anliegende Spannung, eine plasmaelektrolytische Oxidation (PEO) auf der zu bearbeitenden Werkstückoberfläche erfolgt. Mithilfe eines derartigen Verfahrens können besonders harte, verschleißbeständige Randschichten, etwa auf Aluminium und Magnesium, erzeugt werden und/oder es lässt sich das plasmaelektrolytische Beschichten von Werkstückoberflächen realisieren.

Bevorzugt wird beim plasmaelektrolytischen Oxidieren eine Spannung von etwa 200 V zwischen Elektrode und der zu bearbeitenden Werkstückoberfläche angelegt. Denkbar ist in diesem Zusammenhang, dass eine Werkstückbearbeitung erfolgt, indem in einem ersten Schritt ein erster Elektrolyt und ein erstes Spannungsprofil verwendet wird, um einen gezielten Materialabtrag von der zu bearbeitenden Oberfläche zu bewirken, während anschließend in einem zweiten Prozessschritt mithilfe eines zweiten Elektrolyten und eines zweiten Spannungsprofils eine plasmaelektrolytische Beschichtung, oder eine plasmaelektrolytische Oxidation (PEO) erfolgt. Bei Verwendung einer geeignet ausgebildeten Steuereinheit und/oder eines von der Steuereinheit gezielt ansteuerbaren Stellelement ist es denkbar, dass ein wie zuvor erwähnt ausgeführter zwei- oder mehrstufiger Prozess mithilfe einer Ausbringungseinheit oder durch Einsatz wenigstens zweier Ausbringungseinheiten, wobei durch eine Material abgetragen und durch eine andere Material aufgebracht oder verändert wird, erfolgt.

Weiterhin ist es denkbar, das erfindungsgemäße Verfahren derart durchzuführen, dass eine elektrisch leitfähige, insbesondere metallische Oberfläche nicht nur entgratet und/oder poliert wird, sondern auch ein weiterführender Materialabtrag realisiert wird. Für einen solchen Fall wird die Bearbeitung einer Werkstückoberfläche über einen längeren Zeitraum durchgeführt, etwa um eine Rundung im Bereich einer Werkstückkontur herzustellen oder das Oberflächenprofil zu glätten, wie es regelmäßig bei additiv gefertigten Metallbauteilen erforderlich ist. Vorzugsweise wird hierfür entweder die Verweilzeit einer Austrittsöffnung über dem zu bearbeitenden Bereich der Werkstückoberfläche verlängert und/ oder die Spannung kurzzeitig reduziert. Dies verringert die durch die plasmaelektrolytische Bearbeitung hervorgerufenen Effekte an der Werkstückoberfläche und verlagert das Wirkprinzip zugunsten einer elektrochemischen Bearbeitung der Oberfläche, was wiederum mit einer deutlich höheren Materialabtraggeschwindigkeit einhergeht.

Weiterhin ist es vorstellbar die Strömungsgeschwindigkeit des Elektrolyten zu erhöhen und/oder die Strömungsform zu ändern, also insbesondere eine laminare in eine turbulente Strömung zu verändern. Eine Veränderung wird in diesem Fall derart durchgeführt, dass sich die Dicke der an der Werkstückoberfläche vorhandenen Gas- oder Dampfschicht reduziert, oder deren Ausbildung sowie Strömung beeinflusst wird. Gemäß einer besonderen Weiterbildung der Erfindung wird zur Erzeugung einer turbulenten Strömung des Elektrolytstrahls entlang der Werkstückoberfläche Luft und/oder ein Gas in den Elektrolytstrahl eingeblasen und so die Ausbildung der Gas-Plasma-Hülle begünstigt. Denkbar ist in diesem Zusammenhang eine gesteuerte oder geregelte Eindüsung sowie eine Einsaugung von Luft und/oder Gas in wenigstens einen der Elektrolytstrahlen.

Im Weiteren ist es denkbar, gerade zu Beginn eines Bearbeitungsprozesses, wenigstens einen Elektrolytstrahl mit vergleichsweise kleiner Strömungsgeschwindigkeit auf die Werkstückoberfläche zu lenken und in einem nächsten Prozessschritt die Strömungsgeschwindigkeit auf das übliche Arbeitsniveau anzuheben. Eine entsprechende Veränderung der Strömungsgeschwindigkeit wenigstens eines Elektrolytstrahls kann hierbei unabhängig von der Anzahl, Form und Größe der Austrittsöffnungen einer Ausbringungseinheit erfolgen. Weiterhin ist es von Vorteil, zu Beginn eines Arbeitsprozesses, also während des sogenannten Zündens und der Erzeugung eines Plasmas auf der zu bearbeitenden Werkstückoberfläche eine von der Betriebsspannung abweichende Zündungsspannung zwischen der Elektrode und der zu bearbeitenden Werkstückoberfläche anzulegen und/oder den Zündungsprozess durch eine erhöhte oder reduzierte Zugabe von Luft und/oder Gas in den Elektrolytstrahl zu begünstigen.

Gemäß einer speziellen Weiterbildung der Erfindung wird zumindest einer der Elektrolytstrahlen nicht als freier Elektrolytstrahl auf die Oberfläche des Werkstücks gerichtet, sondern zwischen der Austrittsöffnung einer Ausbringungseinheit und der Werkstückoberfläche wird ein Abstandhalter, der nicht elektrisch leitfähig ist, angeordnet. Ein derartiger Abstandshalter ist bevorzugt aus Keramik, Kunststoff und/oder Glas ausgebildet.

In einer speziellen Ausführungsform erfolgt die Bearbeitung einer Werkstückoberfläche mithilfe des erfindungsgemäßen Verfahrens mit einer stationären Ausbringungseinheit, die vorzugsweise Teil einer Schnellspannvorrichtung ist, wobei nach ordnungsgemäßer Fixierung des zu bearbeitenden Werkstücks bereits die erforderliche Bearbeitungsposition der zu bearbeitenden Oberfläche relativ zur Ausbringungseinheit eingestellt und die erforderliche elektrische Kontaktierung hergestellt ist.

Ebenso ist es denkbar, eine kontinuierliche oder getaktete Relativbewegung zwischen dem zu bearbeitenden Werkstück und der Ausbringungseinheit zu initiieren, indem die Ausbringungseinheit und/oder das Werkstück auf geeignete Weise bewegt wird. Denkbar ist in diesem Zusammenhang, dass eine Vorschubbewegung des Werkstücks zumindest zeitweise mithilfe eines Rollensystems erzielt wird, wobei die Rollen auf vorteilhafte Weise gleichzeitig elektrisch leitfähig sind und die Übertragung elektrischer Energie auf die zu bearbeitende Werkstückoberfläche ermöglichen. Alternativ ist es denkbar, geeignete Schleifkontakte zur Übertragung elektrischer Energie auf die zu bearbeitende Werkstückoberfläche vorzusehen.

Im Weiteren sieht eine spezielle Ausgestaltung der Erfindung vor, dass nach einer Bearbeitung einer Werkstückoberfläche und/oder zwischen einzelnen Bearbeitungsschritten mit Materialabtrag, Materialveränderung oder Materialauftrag bevorzugt automatisiert wenigstens ein Reinigungs-, Trocknungs- und/oder Prüfungsschritte, insbesondere mit einer Kamera, durchgeführt wird. Die Reinigung erfolgt vorzugsweise mit deionisiertem Wasser und/oder Ethanol.

In einer weiteren speziellen Ausführungsform des erfindungsgemäßen Verfahrens wird das Werkstück vor der Bearbeitung vorgewärmt, um die Temperaturdifferenz zum Elektrolyten zu reduzieren und möglichst konstante Prozessbedingungen über die gesamte Bearbeitungszeit sicherzustellen. Dies erfolgt vorzugsweise in einem temperierten Fluid, das auch der Elektrolyt selbst sein kann. Weiterhin ist zum Beispiel auch ein Vorwärmen des Werkstücks über Induktion sowie, insbesondere bei der selektiven Bearbeitung einzelner Flächen, über Infrarotstrahler denkbar.

Eine weitere spezielle Ausgestaltung der Erfindung sieht vor, dass der Elektrolyt wenigstens teilweise nach Ausbringung auf die Oberfläche des Werkstücks aufgefangen, durch Veränderung zumindest einer Eigenschaft des aufgefangenen Elektrolyten aufbereitet und in aufbereitetem oder nicht aufbereitetem Zustand erneut auf die Oberfläche des Werkstücks aufgebracht wird.

Ferner ist auf vorteilhafte Weise vorgesehen, dass vor, während oder nach der Bearbeitung der Oberfläche wenigstens ein Bearbeitungs- und/oder Prozessparameter, eine zwischen Elektrode und zu bearbeitender Oberfläche herrschende elektrische Spannung, eine Stärke eines zwischen der Elektrode und der zu bearbeitenden Oberfläche fließenden Stroms, ein Abstand zwischen der Ausbringungseinheit und/oder einer Austrittsöffnung der Ausbringungseinheit und der Werkstückoberfläche, die Versorgung mit Elektrolyten, eine Bewegung des Werkstücks, eine Bewegung der Ausbringungseinheit und/oder wenigstens eine Einstellung eines Emitters, mit dem wenigstens zeitweise Schallwellen und/oder elektromagnetische Wellen in zumindest einen der Elektrolytstrahlen eingekoppelt werden, gemessen und/oder verstellt wird oder werden.

Eine Integration des erfindungsgemäßen Verfahrens in einen industriellen Herstellungsprozess ist im Weiteren auf vorteilhafte Weise möglich, wenn die Kontur der zu bearbeitenden Werkstückoberfläche direkt aus einem CAD-System in eine hierfür vorgesehene Steuereinheit zur Ansteuerung der Ausbringungseinheit und/oder geeigneter Stelleelemente übertragen wird. Durch direkte Übergabe der Fertigungsdaten, und damit der geometrischen Kontur des zu bearbeitenden Werkstücks, können vergleichsweise einfach auch komplexe Werkstückkonturen mithilfe des erfindungsgemäßen Verfahrens bearbeitet werden, was insbesondere ein effektives Entgraten und/oder Polieren von Werkstücken in einer Serienfertigung und/oder additiv gefertigten Bauteilen ermöglicht.

Um Lastspitzen der Stromstärke bei der Herstellung der zur plasmaelektrolytischen Bearbeitung erforderlichen Spannung zwischen der wenigstens einen Elektrode und der zu bearbeitenden Werkstückoberfläche zu vermeiden, ist es denkbar, geeignete Speicherelemente zur Speicherung elektrischer Energie, wie etwa Akkumulatoren und/oder Kondensatoren, insbesondere sogenannte Superkondensatoren, zu verwenden. Durch Einsatz derartiger Energiespeicher ist es möglich, Lastspitzen der Stromstärke bei der Zurverfügungstellung der erforderlichen Spannung, insbesondere während des Zündungsprozesses, abzupuffern. Zudem So lässt sich das Stromnetz eines Industriebetriebs entlasten und ein besonders sicherer Betrieb gewährleisten. Schließlich ist es denkbar, die Speicherelemente so auszulegen, dass die durch sie zur Verfügung gestellte Stromstärke über einen längeren Zeitraum, insbesondere die Bearbeitungsdauer eines Werkstücks, aufrechterhalten werden kann. Auf diese Weise könnte z. B. eine aufgrund der Anschlussleistung auf 150 A Bearbeitungsstrom beschränkte Anlage durch ein entsprechendes Aufladen zur Bearbeitung von Werkstücken eingesetzt werden, die 200 A Bearbeitungsstrom erfordern.

Im Folgenden wird die Erfindung ohne Beschränkung des allgemeinen Erfindungsgedankens anhand spezieller Ausführungsbeispiele unter Bezugnahme auf Figuren näher erläutert. Gleiche Bauteile werden in den unterschiedlichen Figuren mit gleichen Bezugszeichen versehen. Dabei zeigen:
- Fig. 1:: Erste Ausführungsform einer erfindungsgemäß ausgeführten Vorrichtung mit einer stationär angeordneten Ausbringungseinheit sowie
- Fig. 2:: zweite Ausführungsform einer erfindungsgemäß ausgeführten Vorrichtung mit einer zumindest teilweise bewegbaren Ausbringungseinheit.

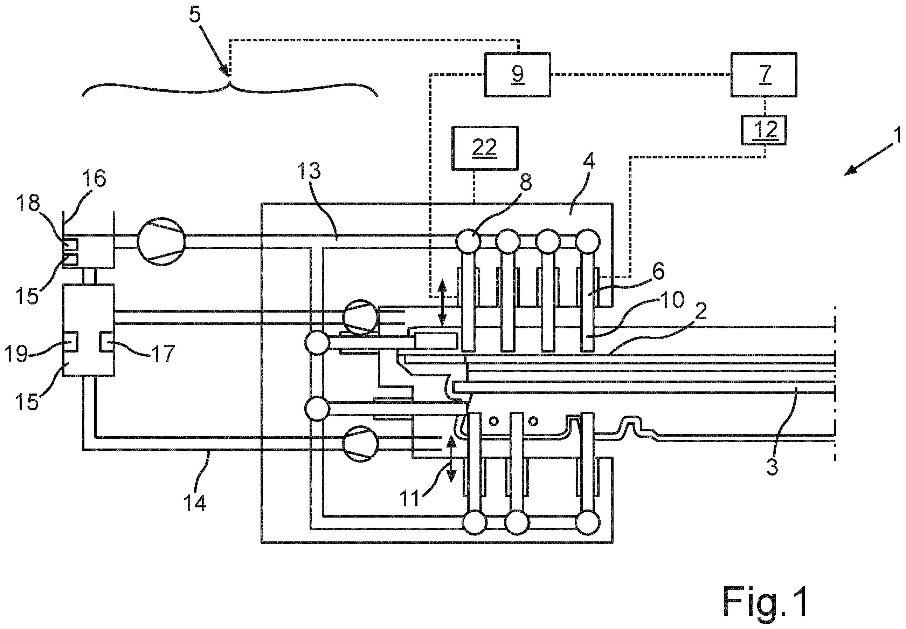

Fig. 1 zeigt in einer schematischen Draufsicht eine erste Ausführungsform einer erfindungsgemäß ausgebildeten Vorrichtung 1 zur plasmaelektrolytischen Bearbeitung, vorzugsweise zum Entgraten und/oder Polieren, einer Oberfläche 2 eines Werkstücks 3. Die dargestellte Vorrichtung 1 verfügt über eine Versorgungseinheit 5, die einer Ausbringungseinheit 4 den zur plasmaelektrolytischen Bearbeitung einer Werkstückoberfläche 2 benötigten Elektrolyten zuführt. Die Versorgungseinheit 5 verfügt hierbei über eine Pumpe, die während des Betriebs den Elektrolyten nahezu pulsationsfrei aus einem Vorratsbehälter 16 zu mehreren Austrittsöffnungen 10 der Ausbringungseinheit 4 in Form von Düsen fördert. Die Förderung des Elektrolyten beginnt, nachdem das Werkstück 3, dessen Oberfläche 2 bearbeitet werden soll, in der Bearbeitungsposition fixiert wurde, wobei eine Mehrzahl von Elektrolytstrahlen aus den einzelnen Austrittsöffnungen 10 aus verschiedenen Richtungen auf die zu bearbeitende Werkstückoberfläche 2 auftreffen. Die Anzahl der Austrittsöffnungen 10, durch die der Elektrolyt ausgebracht wird, sowie deren Ausgestaltung und Ausrichtung wird in Abhängigkeit der Kontur der zu bearbeitenden Werkstückoberfläche 2 sowie der Bearbeitungsaufgabe gewählt. Gemäß dem in Fig. 1 gezeigten Ausführungsbeispiel soll ein zuvor in einer mechanischen Serienfertigung hergestelltes Werkstück 3 mit der erfindungsgemäßen Vorrichtung 1 entgratet werden.

Die gezeigte Vorrichtung 1 verfügt im Übrigen über eine Steuereinheit 9, mit der die Versorgungseinheit 5, aber auch eine als Spannungsquelle eingesetzte elektrische Energiequelle 7 sowie die einzelnen Stellelemente 8 der Vorrichtung 1, mit denen die Ausbringung von Elektrolytstrahlen und die Eigenschaften der Elektrolytstrahlen bedarfsgerecht eingestellt und verändert werden können, gesteuert werden. Um eine geeignete Steuerung der unterschiedlichen Elemente erreichen zu können, ist ferner eine Messeinheit 22 mit geeigneten Sensoren zur kontinuierlichen oder diskontinuierlichen Messung wenigstens einer Eigenschaft der Oberfläche 2, insbesondere der Oberflächenrauheit, zur Bestimmung eines Abstandes zwischen der Ausbringungseinheit 4 und der Oberfläche 2 und/oder zur Bestimmung der Position und/oder Ausrichtung der Ausbringungseinheit 4 relativ zur Oberfläche 2 vorgesehen. Die Messeinheit 22 und die Steuereinheit stehen über eine Datenübertragungsstrecke, die drahtlos und/oder drahtgebunden ausgeführt sein kann, in einem uni- oder bidirektionalen Datenaustausch. Auf diese Weise können sowohl die während der Bearbeitung zwischen den Elektroden 6 der Vorrichtung 1 und der Werkstückoberfläche 2 anliegende elektrische Spannung variiert als auch die einzelnen Austrittsöffnungen 10 gezielt verschlossen und geöffnet werden. Weiterhin kann die Strömungsgeschwindigkeit und der Volumenstrom der einzelnen Elektrolytstrahlen bedarfsgerecht verändert werden.

Der in einem Vorratsbehälter 16 bevorratete Elektrolyt wird mithilfe eines Heizelementes 18 vorerwärmt und dann über die Elektrolytzufuhr 13 mittels einer Mehrzahl von Pumpen zu den einzelnen Austrittsöffnungen 10 gefördert, sodass die einzelnen Austrittsöffnungen 10 separat mit dem Elektrolyten versorgt werden können. Die Zuführung des Elektrolyten zu den Austrittsöffnungen 10 erfolgt ferner über Stellelemente 8, wie etwa Ventile, mit denen die Strömungseigenschaften gezielt variiert werden können. Über die Austrittsöffnungen 10 werden so wenigstens zwei Elektrolytstrahlen mit unterschiedlichen Eigenschaften zeitgleich oder nacheinander auf die zu bearbeitende Werkstückoberfläche 2 aufgebracht.

Während des Bearbeitungsvorgangs wird zwischen wenigstens einer Elektrode 6, die gemäß dem in Fig. 1 gezeigten Ausführungsbeispiel jeweils durch ein Rohrstück gebildet wird, dessen Ende die jeweilige Austrittsöffnung 10 bildet, und der Werkstückoberfläche 2 eine Gleichspannung von 200 V bis 450 V angelegt. Sobald der Elektrolytstrahl auf die zu bearbeitende Werkstückoberfläche 2 auftrifft, kommt es zu einer Gas- bzw. Dampfbildung und es bildet sich auf der Oberfläche 2 eine Gas-Plasma-Hülle aus, unter der es zu dem gewünschten Materialabtrag kommt. Nachdem der Elektrolyt auf die Werkstückoberfläche 2 aufgetroffen ist, wird dieser mittels einer Elektrolytabfuhr 14 der Versorgungseinheit 5 abgesaugt und einer Aufbereitungseinheit 15 zur Elektrolytaufbereitung zugeführt. Hier werden in einem ersten Schritt mithilfe eines Zyklonfilters Schwebteilchen entfernt. Daraufhin wird mittels wenigstens einer Sensoreinheit 17 die Trübung, der pH-Wert sowie die elektrische Leitfähigkeit des abgeführten Elektrolyten gemessen. Sollte der Elektrolyt besonders stark verschmutzt sein, wird über eine Dosiereinheit aus einem Tank ein Fällungsmittel zudosiert, um so eine Fällungsreaktion im Elektrolyten zu bewirken, und der Elektrolyt in einen separaten Aufbereitungstank umgepumpt. Weiterhin wird in Abhängigkeit der erfassten Messwerte für die Leitfähigkeit und den pH-Wert des Elektrolyten bei Bedarf Salz, beispielsweise Ammoniumsalz, und/oder ein pH-Regulator aus entsprechenden Vorratsbehälter mit geeigneten Dosiereinheiten 19 zudosiert. Im Anschluss daran gelangt der aufbereitete Elektrolyt wieder in den Vorratsbehälter 16. Im Bereich des Vorratsbehälters 16 sind ein Temperatursensor 20 und ein Heizelement 18 vorgesehen, sodass der Elektrolyt stets auf die benötigte Temperatur erwärmt wird, bevor dieser der Ausbringungseinheit 4 mit der Mehrzahl von Austrittsöffnungen 10 zugeführt wird.

Gemäß dem in Fig. 1 gezeigten Ausführungsbeispiel erfolgt die Bearbeitung der Werkstückoberfläche 2, indem das Werkstück 3 im Bereich der Ausbringungseinheit 4 der erfindungsgemäß ausgeführten Vorrichtung 1 fixiert bzw. eingespannt wird. Das Werkstück 3 wird somit zu seiner Bearbeitung in die hierfür vorgesehene Position eingefahren und in dieser Position fixiert. Im Anschluss daran werden die einzelnen düsenförmigen Austrittsöffnungen 10 in ihre Bearbeitungsposition ausgefahren. Während der Bearbeitung der Werkstückoberfläche 2 findet gemäß dem hier beschriebenen Ausführungsbeispiel keine Relativbewegung zwischen der Ausbringungseinheit 4 sowie dem Werkstück 3, dessen Oberfläche 2 bearbeitet werden soll, statt.

Die einzelnen Austrittsöffnungen 10 der Ausbringungseinheit 4 und damit die Projektionsflächen der durch diese ausgebrachten Elektrolytstrahlen bilden die Form der zu bearbeitenden Oberfläche 2 des Werkstücks 3 vollständig ab. Nach Abschluss der Bearbeitung werden die Austrittsöffnungen 10 wieder in ihre Ruheposition verfahren, sodass sich der Abstand zwischen dem Werkstück 3 und den Austrittsöffnungen 10 vergrößert. Daraufhin wird die Fixierung des Werkstücks 3 gelöst und das entgratete Werkstück ausgeworfen.

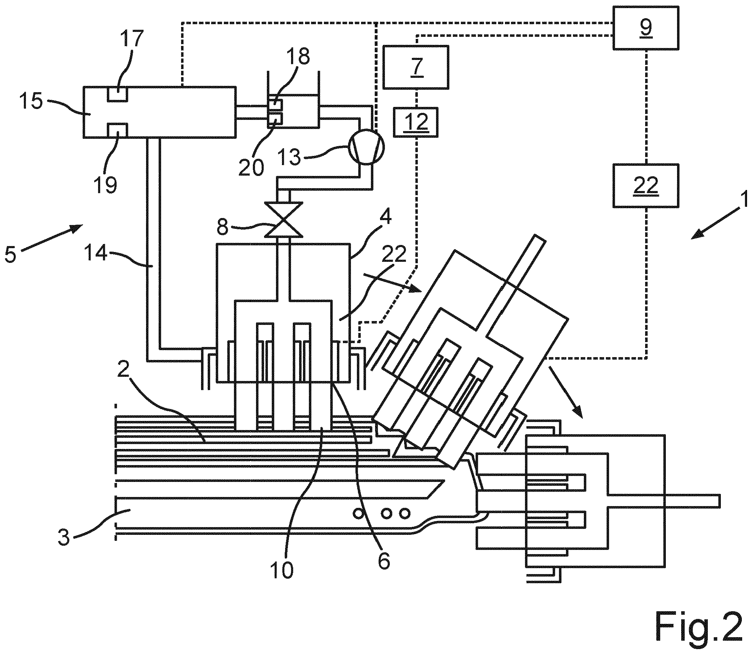

Fig. 2 zeigt eine zweite Ausführungsform der erfindungsgemäßen Vorrichtung 1, wobei die Ausbringungseinheit 4 in diesem Fall über einen bewegbaren Düsenkopf 21 mit drei Austrittsöffnungen 10 in Düsenform verfügt. Über die Austrittsöffnungen 10 können wiederum bedarfsgerecht unterschiedliche Elektrolytstrahlen auf die zu bearbeitende Werkstückoberfläche 2 ausgebracht werden. Die Versorgung der einzelnen Austrittsöffnung 10 mit dem Elektrolyten, die Steuerung der Ausbringungseinheit 4 sowie die Aufbereitung des von der Werkstückoberfläche 2 abgesaugten Elektrolyten erfolgt mit den gleichen Elementen, wie sie im Zusammenhang mit Fig. 1 erläutert wurden.

Im Gegensatz zu dem in Fig. 1 gezeigten Ausführungsbeispiel verfügt die in Fig. 2 dargestellte Ausbringungseinheit 4 allerdings über Austrittsöffnungen 10, die auch während der Bearbeitung relativ zum Werkstück 3 bewegbar sind, wobei gemäß dem gezeigten Ausführungsbeispiel drei düsenförmige Austrittsöffnungen 10 gemeinsam mit einem Düsenkopf 21, wie mit Pfeilen angedeutet, relativ zum Werkstück 3 bewegt werden.

Die gesteuerte Bewegung der Austrittsöffnungen 10 und die Ausbringung des Elektrolyten erfolgt in Abhängigkeit der Kontur des in seiner Bearbeitungsposition fixierten bzw. eingespannten Werkstücks 3, wobei die Bewegung des Düsenkopfes 21, die Zuführung von Elektrolyt zu den einzelnen Austrittsöffnungen 10, das Zu- und Abschalten der im Bereich der Austrittsöffnungen 10 angeordneten Elektroden 6 sowie die Einstellung der zwischen einer aktivierten Elektrode 6 und der zu bearbeitenden Werkstückoberfläche 2 anliegenden Spannung bedarfsgerecht, insbesondere in Abhängigkeit der Kontur eines gerade zu bearbeitenden Oberflächenbereichs, während der Bearbeitung verändert wird. Die Austrittsöffnungen 10 werden wiederum durch Rohrstücke und deren offene Enden gebildet, wobei die einzelnen elektrisch leitfähigen Rohrstücke die Funktion von Elektroden 6, hier als Kathoden, übernehmen, die während der Bearbeitung die Gegenelektroden zur anodischen Werkstückoberfläche 2 darstellen. Während eines Bearbeitungsvorgangs wird zwischen den jeweils aktivierten Rohrstücken und der zu bearbeitenden Werkstückoberfläche 2 eine Spannung von 200 V bis 450 V angelegt. Sowohl während des Zündungsvorgangs zu Beginn der Werkstückbearbeitung als auch zur Initiierung elektrochemischer Bearbeitungsschritte kann diese Spannung durch Veränderung eines Abstandes zwischen den im Bereich der Austrittsöffnungen 10 angeordneten Elektroden 6 und der Werkstückoberfläche 2 und/oder gezielte Verstellung der als Spannungsquelle dienenden elektrischen Energiequelle 7 verändert werden.

Während des Bearbeitungsvorgangs wird der Düsenkopf 21 mit seinen düsenförmigen Austrittsöffnungen 10 dann derart verfahren, dass die gewünschte Kontur der Werkstückoberfläche 2 bearbeitet, hier entgratet wird.

Mit der in Fig. 2 gezeigten Vorrichtung 1 sind prinzipiell zwei unterschiedliche Formen der kontinuierlichen Bearbeitung eines Werkstücks 3 möglich. So kann die Ausbringungseinheit 4 mit ihrem Düsenkopf 21 derart eingerichtet und positioniert werden, dass hierdurch die Außenkontur des zu bearbeitenden Werkstücks 3 exakt oder ungefähr abgebildet wird. Sobald eine entsprechende Positionierung abgeschlossen ist, wird das Werkstück 3 entlang der Ausbringungseinheit 4 mit dem Düsenkopf 21 und seinen Austrittsöffnungen 10 geführt. Sofern einzelne Oberflächenbereiche des entlang der Ausbringungseinheit 4 geführten Werkstücks 3 nicht bearbeitet werden sollen, ist es möglich, in diesen Bereich das Ausbringen von Elektrolytstrahlen und/oder das Anlegen einer Spannung, insbesondere über ein Stellmittel 12, zu unterbrechen.

Bei der zweiten denkbaren kontinuierlichen Bearbeitungsform bildet die Ausbringungseinheit 4 mit dem in Fig. 2 gezeigten Düsenkopf 21 eine generische Form ab, beispielsweise eine rechteckige Fläche oder eine Halbkugel mit radial ausgerichteten Austrittsöffnungen. In diesem Fall ist es denkbar, dass die Ausbringungseinheit 4 mit ihren bewegbar angeordneten Düsenkopf 21 durch geeignete Antriebselemente, wie etwa Industrieroboterarme, bewegt und positioniert wird, um die zu bearbeitenden Oberflächenbereiche des Werkstücks nacheinander abzufahren.

### Bezugszeichenliste

- 1: Vorrichtung zur plasmaelektrolytischen Bearbeitung einer elektrisch leitfähigen Werkstückoberfläche
- 2: Oberfläche
- 3: Werkstück
- 4: Ausbringungseinheit
- 5: Versorgungseinheit
- 6: Elektrode
- 7: elektrische Energiequelle
- 8: Stellelement
- 9: Steuereinheit
- 10: Austrittsöffnung
- 11: Verstelleinheit
- 12: Stellmittel
- 13: Elektrolytzufuhr
- 14: Elektrolytabfuhr
- 15: Aufbereitungseinheit
- 16: Vorratsbehälter
- 17: Sensoreinheit
- 18: Heizelement
- 19: Dosiereinheit
- 20: Temperatursensor
- 21: Düsenkopf
- 22: Messeinheit

## Patentansprüche

1. Vorrichtung (1) zur plasmaelektrolytischen Bearbeitung einer elektrisch leitfähigen Oberfläche (2) eines Werkstücks (3), die über eine Ausbringungseinheit (4) zur Beaufschlagung der Oberfläche (2) mit einem Elektrolytstrahl, über eine Versorgungseinheit (5) zur wenigstens zeitweisen Versorgung der Ausbringungseinheit (4) mit dem zur Erzeugung des Elektrolytstrahls erforderlichen Elektrolyten, über wenigstens eine Elektrode (6), die während der Bearbeitung eine Gegenelektrode zur Oberfläche (2) bildet und über wenigstens eine elektrische Energiequelle (7), mit der während der Bearbeitung die Elektrode und die Oberfläche derart mit elektrischer Energie versorgbar sind, dass zwischen der Elektrode (6) und der zu bearbeitenden Oberfläche (2) bei Berührung des Elektrolyten ein Strom fließt, verfügt,
**dadurch gekennzeichnet, dass** die Ausbringungseinheit (4) ausgebildet ist, um die Oberfläche (2) des Werkstücks (3) zeitgleich oder zeitlich nacheinander mit einem ersten und wenigstens einem zweiten Elektrolytstrahl, die unterschiedliche Strahlformen, Strahlrichtungen, Strahlwirkbereiche auf der zu bearbeitenden Oberfläche, Anordnungen im Raum, Strahlzusammensetzungen und/oder Strömungseigenschaften aufweisen, zu beaufschlagen.

2. Vorrichtung nach Anspruch 1,
**dadurch gekennzeichnet, dass** die Ausbringungseinheit (4) wenigstens ein Stellelement (8) aufweist, durch das die Strahlform, Strahlrichtung, Strahlzusammensetzung der Strahlwirkbereich, und/oder eine Strömungseigenschaft des Elektrolytstrahls veränderbar ist.

3. Vorrichtung nach Anspruch 1 oder 2,
**dadurch gekennzeichnet, dass** wenigstens eine Messeinheit (22) zur kontinuierlichen oder diskontinuierlichen Messung wenigstens einer Eigenschaft der Oberfläche (2), zur Bestimmung eines Abstandes zwischen der Ausbringungseinheit (4) und der Oberfläche (2) und/oder zur Bestimmung der Relativposition der Ausbringungseinheit (4) zur Oberfläche (2) und/oder eine Steuereinheit (9), durch die in Abhängigkeit einer Eigenschaft der Werkstückoberfläche (2) und/oder eines zugehörigen Sollwerts ein Steuersignal generierbar und an die Ausbringungseinheit (4) zur Veränderung der Strahlform, Strahlrichtung, der Strahlzusammensetzung, des Strahlwirkbereichs, der Anordnung der Elektrolytstrahlen im Raum und/oder der Strömungseigenschaft des Elektrolytstrahls übertragbar ist, vorgesehen ist.

4. Vorrichtung nach einem der vorangehenden Ansprüche,
**dadurch gekennzeichnet, dass** die Ausbringungseinheit (4) wenigstens zwei Austrittsöffnungen (10) aufweist.

5. Vorrichtung nach Anspruch 4,
**dadurch gekennzeichnet, dass** die Austrittsöffnungen (10) bewegbar angeordnet, unterschiedlich dimensioniert, rohr- oder düsenförmig ausgebildet, separat von der Versorgungseinheit mit dem Elektrolyten versorgbar sind und/oder ausgebildet sind, um wenigstens zwei Elektrolytstrahlen mit unterschiedlichen Strahlformen, Strahlwirkbereichen, Anordnungen im Raum und/oder Strömungseigenschaften auf die Werkstückoberfläche auszubringen.

6. Vorrichtung nach einem der vorangehenden Ansprüche,
**dadurch gekennzeichnet, dass** wenigstens eine Verstelleinheit (11) zur Veränderung eines Abstandes und/oder der Relativposition zwischen der Oberfläche (2) des Werkstücks (3) und wenigstens einer Austrittsöffnung (10) der Ausbringungseinheit (4) vorgesehen ist.

7. Vorrichtung nach einem der vorangehenden Ansprüche,
**dadurch gekennzeichnet, dass** die Elektrode (6) im Betrieb den Elektrolytstrahl wenigstens bereichsweise umgibt.

8. Vorrichtung nach einem der vorangehenden Ansprüche,
**dadurch gekennzeichnet, dass** eine Versorgung der Elektrode mit elektrischer Energie, eine zwischen Elektrode und zu bearbeitender Oberfläche herrschende elektrische Spannung und/oder eine Stärke eines zwischen der Elektrode und der zu bearbeitenden Oberfläche fließenden Stroms mithilfe wenigstens eines Stellmittels (12) veränderbar ist.

9. Vorrichtung nach einem der vorangehenden Ansprüche,
**dadurch gekennzeichnet, dass** die Versorgungseinheit (5) eine Elektrolytzufuhr (13), über die der Ausbringungseinheit (4) Elektrolyt zuführbar ist, eine Elektrolytabfuhr (14), über die von der Ausbringungseinheit (4) ausgebrachter Elektrolyt abführbar ist und/oder eine Aufbereitungseinheit (15), über die wenigstens eine Eigenschaft des abgeführten Elektrolyten veränderbar ist, aufweist.

10. Vorrichtung nach einem der vorangehenden Ansprüche,
**dadurch gekennzeichnet, dass** wenigstens eine Sensoreinheit (17) vorgesehen ist, mit der wenigstens eine Eigenschaft des Elektrolyten erfassbar ist.

11. Vorrichtung nach einem der vorangehenden Ansprüche,
**dadurch gekennzeichnet, dass** wenigstens ein Emitter vorgesehen ist, mit dem wenigstens zeitweise Schallwellen und/oder elektromagnetische Wellen in zumindest einen der Elektrolytstrahlen einkoppelbar sind.

12. Verfahren zur plasmaelektrolytischen Bearbeitung einer elektrisch leitfähigen Oberfläche (2) eines Werkstücks (3), bei dem wenigstens ein Elektrolyt zu einer Ausbringungseinheit (4) gefördert wird, durch die zumindest zeitweise die Oberfläche (2) des Werkstücks (3) mit einem Elektrolytstrahl beaufschlagt wird, zwischen der zu bearbeitenden Oberfläche (2) des Werkstücks (3) und einer Elektrode (6), die wenigstens teilweise den Elektrolyten berühren, eine elektrische Spannung angelegt wird, sodass die Elektrode (6) während der Bearbeitung eine Gegenelektrode zur Oberfläche (2) des Werkstücks (3) bildet,
**dadurch gekennzeichnet, dass** die die Oberfläche (2) des Werkstücks (3) über die Ausbringungseinheit (4) zeitgleich oder zeitlich nacheinander mit einem ersten und wenigstens einem zweiten Elektrolytstrahl, die unterschiedliche Strahlformen, Strahlrichtungen, Strahlwirkbereiche, Anordnungen im Raum, Strahlzusammensetzungen und/oder Strömungseigenschaften aufweisen, beaufschlagt wird.

13. Verfahren nach Anspruch 12,
**dadurch gekennzeichnet, dass** die zu bearbeitende Oberfläche (2) des Werkstücks (3) relativ zur Ausbringungseinheit (4) bewegt wird.

14. Verfahren nach Anspruch 12 oder 13,
**dadurch gekennzeichnet, dass** der Elektrolyt wenigstens teilweise nach Ausbringung auf die Oberfläche (2) des Werkstücks (3) aufgefangen, durch Veränderung zumindest einer Eigenschaft des aufgefangenen Elektrolyten aufbereitet und in aufbereitetem oder nicht aufbereitetem Zustand erneut auf die Oberfläche (2) des Werkstücks (3) aufgebracht wird.

15. Verfahren nach einem der vorangehenden Ansprüche,
**dadurch gekennzeichnet, dass** vor, während oder nach der Bearbeitung der Oberfläche wenigstens ein Bearbeitungs- und/oder Prozessparameter, eine zwischen Elektrode (6) und zu bearbeitender Oberfläche (2) anliegende elektrische Spannung, eine Stärke eines zwischen der Elektrode (6) und der zu bearbeitenden Oberfläche (2) fließenden Stroms, ein Abstand zwischen der Ausbringungseinheit (4) und/oder einer Austrittsöffnung (10) der Ausbringungseinheit (4) und der Werkstückoberfläche (2), die Versorgung mit Elektrolyten, eine Bewegung des Werkstücks (3), eine Bewegung der Ausbringungseinheit (4), und/oder wenigstens eine Einstellung eines Emitters, mit dem wenigstens zeitweise Schallwellen und/oder elektromagnetische Wellen in zumindest einen der Elektrolytstrahlen eingekoppelt werden, gemessen und/oder verstellt wird.
